# FASCICULE DE BREVET EUROPEEN

(11) **EP 2 370 280 B1**
(45) Date de publication et mention de la délivrance du brevet: **13.02.2013**
(21) Numéro de dépôt: 09801504.3
(22) Date de dépôt: 07.12.2009
(51) Int. Cl.: B60H 1/00

(54) **DISPOSITIF POUR REFROIDIR LES BATTERIES D'UN VEHICULE NOTAMMENT ELECTRIQUE ET VEHICULE EQUIPE D'UN TEL DISPOSITIF**
VORRICHTUNG ZUM KÜHLEN DER BATTERIEN EINES FAHRZEUGS, INSBESONDERE EINES ELEKTROFAHRZEUGS, UND FAHRZEUG MIT SOLCH EINER VORRICHTUNG
DEVICE FOR COOLING THE BATTERIES OF AN ESPECIALLY ELECTRIC VEHICLE AND VEHICLE COMPRISING SUCH A DEVICE

(30) Priorité: 30.12.2008 FR 0859125
(43) Date de publication de la demande: 05.10.2011
(73) Titulaire: Renault S.A.S., 92100 Boulogne-Billancourt (FR)
(72) Inventeur: YU, Robert, F-78180 Montigny Le Bretonneux (FR); DUBIEF, Flavien, CH-2000 Neuchatel (CH); ORIGUCHI, Masato, F-78120 Rambouillet (FR)
(86) Numéro de dépôt international: PCT/FR2009/052428
(87) Numéro de publication internationale: WO 2010/076454

(56) Documents cités:
- WO-A-2005/092650
- WO-A-2007/111209
- US-A1- 2003 226 653

## Description

La présente invention concerne un dispositif pour refroidir la ou les batteries d'un véhicule automobile notamment électrique, du type hybride ou tout électrique.

Les véhicules à moteur électrique sont alimentés en énergie électrique par une batterie dont la durée de vie est primordiale compte tenu de son prix initial.

Ces batteries électrochimiques, très sensibles aux variations de température, sont généralement conçues pour fonctionner de manière optimale dans une gamme de température de 20 à 40°C, voire de 20 à 30°C.

Une température supérieure à 40°C permet d'améliorer les performances d'une batterie au lithium mais augmente sa vitesse de dégradation, une température de 40°C étant déjà élevée pour assurer une longue durée de vie.

Une température supérieure à 40°C pour une batterie de type NiMH (ou NiCd) affecte la capacité de charge de la batterie et accélère sa montée en température.

En raison de leur taille et poids relativement importants (typiquement 15 à 20 kWh pour une batterie de 150 à 200 kg assurant une autonomie de 100 à 150 km), ces batteries montent lentement en température mais sont difficiles à refroidir.

La génération de chaleur étant proportionnelle au carré du courant électrique et la puissance étant proportionnelle au courant, la génération de chaleur est proportionnelle au carré de la puissance.

Une charge très rapide de la batterie (en une quinzaine de minutes) peut donc provoquer une génération de chaleur très importante dans la batterie.

Dans le cas d'un système de charge rapide de la batterie, le conducteur peut utiliser le véhicule plusieurs fois dans la même journée en chargeant rapidement la batterie après sa décharge complète suite à l'utilisation du véhicule.

Dans ce cas, la température de la batterie va augmenter de plus en plus jusqu'à atteindre la température autorisée maximale, la batterie n'ayant pas le temps de refroidir entre deux cycles de charge rapide de la batterie.

Il est alors nécessaire de refroidir la batterie afin de préserver sa durée de vie.

Le document US 5 834 132 propose un système de régulation de la température d'une batterie de véhicule automobile.

Ce système prévoit un circuit de refroidissement circulant entre les cellules de la batterie, ce circuit étant alimenté en fluide de refroidissement par un réservoir.

Une pompe est nécessaire pour assurer la circulation du fluide de refroidissement.

Le fluide est refroidi par l'air extérieur au moyen d'un radiateur et d'un ventilateur associé.

Toutefois, afin d'assurer un refroidissement efficace, les dimensions du radiateur et la capacité du ventilateur doivent être importantes, les différences de température entre l'air extérieur et le fluide et entre la batterie et le fluide étant relativement faibles.

Il en résulte un encombrement et un poids relativement important d'un tel système, qui de plus est complexe et coûteux en raison du circuit de refroidissement, de la pompe, du radiateur et du ventilateur de tailles importantes, des valves nécessaires.

En outre, un tel système n'est pas suffisamment efficace pour refroidir la batterie en cas de charges rapides successives en raison de la génération de chaleur très importante en un temps très court.

Un autre dispositif de refroidissement connu utilise pour refroidir la ou les batteries, le système de climatisation du véhicule.

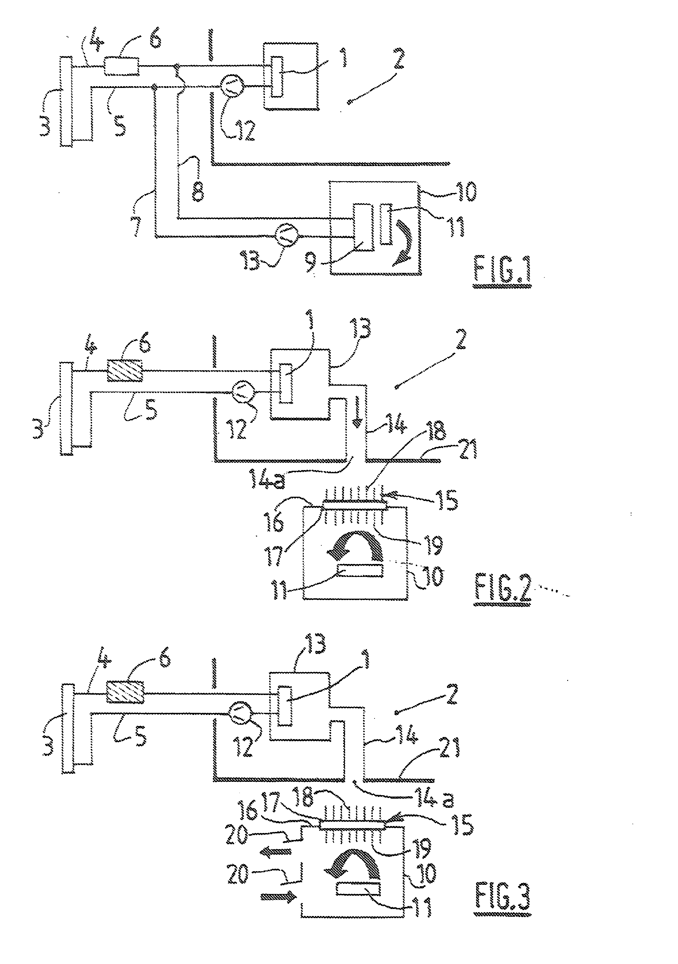

Ce dispositif équipe les véhicules du type Ford Escape et est schématisé sur la figure 1.

Ce dispositif comprend un évaporateur 1 situé dans l'habitacle 2 qui est relié au condenseur 3 situé à l'extérieur de l'habitacle par deux conduits 4, 5 dans lesquels circule un liquide frigorigène, tel que du fréon qui est comprimé dans un compresseur 6.

Les deux conduits 4, 5 sont reliés à deux conduits 7, 8 de dérivation qui sont reliés à un évaporateur 9 qui refroidit l'intérieur d'un bac 10 renfermant les batteries 11.

Les détenteurs 12, 13 permettent de régler la circulation du liquide frigorigène dans les conduits 4, 5 et 7, 8.

L'inconvénient de ce dispositif de refroidissement réside dans le fait que l'évaporateur 9 est situé dans le bac 10 qui renferme les batteries, ce qui augmente le volume de ce bac 10 et complique le raccordement entre l'évaporateur 9 et le circuit de dérivation du liquide frigorigène, ce qui pose des problèmes lorsque l'on veut enlever le bac 10 du véhicule.

Un autre dispositif de refroidissement, connu du document WO 2007/111209, qui constitue l'art antérieur le plus proche, présente un dispositif pour refroidir la ou les batteries d'un véhicule automobile, en particulier d'un véhicule électrique, comprenant un climatiseur dont l'évaporateur est adapté pour refroidir l'habitacle du véhicule et est contenu dans une enceinte, la ou les batteries étant situées dans un bac, ce dispositif étant caractérisé en ce que l'enceinte de l'évaporateur est raccordée à un conduit dont la sortie est dirigée vers une zone d'échange thermique prévue sur au moins une face extérieure du bac contenant la ou les batteries.

Ainsi, une partie de l'air froid produit par l'évaporateur est prélevé dans l'enceinte renfermant ce dernier et est envoyé par le conduit vers la zone d'échange thermique prévue sur au moins une face du bac, ce qui permet de refroidir la ou les batteries.

De ce fait, le bac ne comporte pas de second évaporateur, ce qui permet de simplifier la fabrication de ce bac.

Dans ce dispositif connu, ladite zone d'échange thermique comporte une partie extérieure audit bac disposée en regard de la sortie dudit conduit et une partie disposée en regard de l'intérieur dudit bac. Le but de la présente invention est d'améliorer un tel dispositif.

Selon l'invention, ladite zone d'échange thermique est constituée par un radiateur comportant une semelle métallique présentant sur l'une de ses faces une première série d'ailettes dirigées vers la sortie dudit conduit et sur la face opposée une seconde série d'ailettes dirigées vers l'intérieur dudit bac.

Ainsi, la première série d'ailettes permettent de refroidir le radiateur par l'air froid sortant du conduit et la seconde série d'ailettes permettent à leur tour de refroidir l'air contenu dans le bac, ce qui permet de refroidir efficacement la ou les batteries.

Dans ce mode de réalisation, ledit radiateur est raccordé de façon étanche à une paroi extérieure dudit bac située en regard de la sortie dudit conduit.

L'échange thermique entre les ailettes du radiateur et la ou les batteries peut être réalisé par convection naturelle de l'air ou par convection forcée au moyen d'un ventilateur.

Cet échange thermique peut également être réalisé par conduction au moyen d'une structure métallique ou de caloducs.

Dans une version améliorée du dispositif selon l'invention, au moins l'une des parois extérieures du bac contenant la ou les batteries comporte au moins un volet pouvant être ouvert pour mettre l'intérieur du bac en communication avec l'air ambiant.

Ainsi, lorsque l'air ambiant est froid, ledit volet peut être ouvert pour refroidir l'intérieur du bac par l'air froid extérieur, ce qui permet de couper la climatisation du véhicule et de réaliser ainsi une économie d'énergie.

Selon un autre aspect, l'invention concerne également un véhicule automobile, notamment électrique comprenant un dispositif de refroidissement selon l'invention.

Dans une version préférée de ce véhicule, le bac contenant la ou les batteries est fixé de façon amovible dans ce véhicule, ce qui ne présente pas de difficultés, étant donné que le bac ne renferme pas d'évaporateur et que le radiateur (ou ladite zone d'échange thermique) est libre physiquement par rapport au reste du dispositif de climatisation.

D'autres particularités et avantages de l'invention apparaîtront encore tout au long de la description ci-après.

Aux dessins annexés, donnés à titre d'exemples, non limitatifs :
- la figure 2 est un schéma d'un dispositif de refroidissement selon l'invention,
- la figure 3 est un schéma d'un dispositif de refroidissement amélioré.

Sur les schémas des figures 2 et 3, les éléments identiques à ceux du dispositif de refroidissement connu de la figure 1 portent les mêmes références numériques.

De ce fait, les éléments communs entre les figures 2, 3 et 1 ne seront pas redécrits.

Dans la réalisation représentée sur les figures 2 et 3, le dispositif pour refroidir la ou les batteries 11 d'un véhicule automobile, en particulier d'un véhicule électrique, comprend un climatiseur dont l'évaporateur 1 est adapté pour refroidir l'habitacle 2 du véhicule et est contenu dans une enceinte 13.

Cette enceinte 13 comporte une sortie (non représentée) pour diffuser de l'air froid dans l'habitacle 2.

Conformément à l'invention, l'enceinte 13 de l'évaporateur 1 est raccordée à un conduit 14 dont la sortie 14a est dirigée vers une zone d'échange thermique 15 prévue sur une face extérieure 16 du bac contenant la batterie 11.

Cette zone d'échange thermique 15 comporte une partie extérieure au bac 10 disposée en regard de la sortie 14a du conduit 14 et une partie intérieure disposée en regard de l'intérieur du bac 10.

Dans l'exemple représenté sur les figures 2 et 3, la zone d'échange thermique 15 est constituée par un radiateur comportant une semelle métallique 17 présentant sur l'une de ses faces une première série d'ailettes 18 dirigées vers la sortie 14a du conduit 14 et sur la face opposée une seconde série d'ailettes 19 dirigées vers l'intérieur du bac 10.

Le radiateur 15 est raccordé de façon étanche à une paroi extérieure du bac 10 située en regard de la sortie 14a du conduit 14.

L'échange thermique entre les ailettes 19 du radiateur 15 et la batterie 11 peut être réalisé par convection naturelle ou forcée au moyen d'un ventilateur.

Cet échange thermique peut également être réalisé par conduction entre les ailettes 19 du radiateur 15 et la batterie 11 au moyen d'une structure métallique ou de caloducs.

Dans la version représentée sur la figure 3, l'une des parois extérieures du bac 10 contenant la batterie 11 comporte des volets 20 pouvant être ouverts pour mettre l'intérieur du bac 10 en communication avec l'air ambiant, lorsque la température extérieure est suffisamment basse pour refroidir la batterie 11.

Le bac 10 contenant la batterie 11 est fixé de façon amovible, par exemple sous le plancher 21 du véhicule sensiblement à la verticale de l'enceinte 13 du climatiseur pour que le conduit 14 soit le plus court possible.

La fixation amovible du bac 10 ne présente pas de difficulté particulière étant donné qu'il n'y a aucune liaison physique entre le bac 10 et le reste du climatiseur, contrairement au cas de l'état de la technique représenté sur la figure 1.

On va maintenant expliquer, en référence à la figure 3, le fonctionnement du dispositif de refroidissement selon l'invention.

Lorsque le détenteur 12 du circuit 4, 5 est en route, le liquide frigorigène, tel que du fréon circule dans l'évaporateur 1, ce qui a pour effet de refroidir l'habitacle 2 et d'envoyer de l'air frais dans le conduit 14.

L'air frais sortant de la sortie 14a de ce conduit refroidit les ailettes 18 du radiateur 15 et les ailettes 19 de celui-ci refroidissent l'air contenu dans le bac 10 ce qui, par convection naturelle ou forcée au moyen d'un ventilateur, refroidit la batterie 11.

Le dispositif de refroidissement permet ainsi d'éviter que la température des batteries dépasse une température de l'ordre de 40°C, tout en permettant de refroidir l'habitacle 2 lors de la circulation du véhicule.

Lorsque le véhicule est à l'arrêt, le dispositif permet également de refroidir efficacement les batteries 11 lors d'un cycle de recharge rapide de celles-ci.

Dans ce cas, il suffit de faire tourner le moteur du véhicule pour entraîner le compresseur 6 et de fermer la sortie de l'enceinte 13 pour éviter de refroidir inutilement l'habitacle 2.

Lorsque la température ambiante est suffisamment basse, on peut ouvrir les volets 20 du bac 10 et arrêter la climatisation du véhicule.

Dans ce cas, en effet, l'air extérieur est suffisamment froid pour refroidir l'air à l'intérieur du bac 10 et la batterie 11 située à l'intérieur de celui-ci.

## Revendications

1. Dispositif pour refroidir la ou les batteries (11) d'un véhicule automobile, en particulier d'un véhicule électrique, comprenant un climatiseur dont l'évaporateur (1) est adapté pour refroidir l'habitacle (2) du véhicule et est contenu dans une enceinte (13), la ou les batteries (11) étant situées dans un bac (10), ce dispositif étant tel que l'enceinte (13) de l'évaporateur (1) est raccordée à
un conduit (14) dont la sortie (14a) est dirigée vers une zone d'échange thermique (15) prévue sur au moins une face extérieure (16) du bac (10) contenant la ou les batteries (11), ladite zone d'échange thermique (15) comportant une partie extérieure audit bac (10) disposée en regard de la sortie (14a) dudit conduit (14) et une partie disposée en regard de l'intérieur dudit bac (10), ledit dispositif étant **caractérisé en ce que** ladite zone d'échange thermique (15) est
constituée par un radiateur comportant une semelle métallique (17) présentant sur l'une de ses faces une première série d'ailettes (18) dirigées vers la sortie (14a) dudit conduit (14) et sur la face opposée une seconde série d'ailettes (19) dirigées vers l'intérieur dudit bac (10).

2. Dispositif selon la revendication 1, **caractérisé en ce que** ledit radiateur (15) est raccordé de façon étanche à une paroi extérieure dudit bac (10) située en regard de la sortie (14a) dudit conduit (14).

3. Dispositif selon l'une des revendications 1 ou 2, **caractérisé en ce qu'**il comprend des moyens d'échange thermique par convection entre les ailettes (19) du radiateur (15) et la ou les batteries (11).

4. Dispositif selon l'une des revendications 1 ou 2, **caractérisé en ce qu'**il comprend des moyens d'échange thermique par conduction entre les ailettes (19) du radiateur (15) et la ou les batteries (11), ces moyens comprenant une structure métallique ou des caloducs.

5. Dispositif selon l'une des revendications 1 à 4, **caractérisé en ce qu'**au moins l'une des parois extérieures du bac (10) contenant la ou
les batteries (11) comporte au moins un volet (20) pouvant être ouvert pour mettre l'intérieur du bac (10) en communication avec l'air ambiant.

6. Véhicule automobile, notamment véhicule électrique, équipé d'un dispositif de refroidissement selon l'une des revendications 1 à 5.

7. Véhicule automobile selon la revendication 6, **caractérisé en ce que** le bac (10) contenant la ou les batteries (11) est fixé de façon amovible dans le véhicule.

## Claims

1. Device for cooling the battery or batteries (11) of a motor vehicle, in particular of an electric vehicle, comprising an air conditioner of which the evaporator (1) is suitable for cooling the passenger compartment (2) of the vehicle and is contained in an enclosure (13), the battery or batteries (11) being situated in a casing (10), this device being such that the enclosure (13) of the evaporator (1) is connected to a duct (14) the outlet (14a) of which is directed toward a heat-exchange zone (15) provided on at least one outer face (16) of the casing (10) containing the battery or batteries (11), said heat-exchange zone (15) comprising a portion external to said casing (10) placed facing the outlet (14a) of said duct (14) and a portion placed facing the inside of said casing (10), said device being **characterized in that** said heat-exchange zone (15) consists of a radiator comprising a metal base (17) having on one of its faces a first series of fins (18) directed toward the outlet (14a) of said duct (14) and on its opposite face a second series of fins (19) directed toward the inside of said casing (10).

2. Device according to Claim 1, **characterized in that** said radiator (15) is connected in a sealed manner to an outer wall of said casing (10) situated facing the outlet (14a) of said duct (14).

3. Device according to one of Claims 1 and 2, **characterized in that** it comprises means for heat exchange by convection between the fins (19) of the radiator (15) and the battery or batteries (11).

4. Device according to one of Claims 1 and 2, **characterized in that** it comprises means for heat exchange by conduction between the fins (19) of the radiator (15) and the battery or batteries (11), these means comprising a metal structure or heat pipes.

5. Device according to one of Claims 1 to 4, **characterized in that** at least one of the outer walls of the casing (10) containing the battery or batteries (11) comprises at least one flap (20) that is able to be opened in order to place the inside of the casing (10) in communication with the ambient air.

6. Motor vehicle, notably an electric vehicle, fitted with a cooling device according to one of Claims 1 to 5.

7. Motor vehicle according to Claim 6, **characterized in that** the casing (10) containing the battery or batteries (11) is attached in a removable manner in the vehicle.

## Patentansprüche

1. Vorrichtung zum Kühlen der Batterie oder der Batterien (11) eines Kraftfahrzeugs, insbesondere eines Elektrofahrzeugs, das eine Klimaanlage enthält, deren Verdampfer (1) geeignet ist, um den Innenraum (2) des Fahrzeugs zu kühlen, und in einem geschlossenen Raum (13) enthalten ist, wobei die Batterie oder die Batterien (11) sich in einem Behälter (10) befinden, wobei diese Vorrichtung so ist, das der Raum (13) des Verdampfers (1) an einen Kanal (14) angeschlossen ist, dessen Ausgang (14a) zu einer Wärmetauschzone (15) gerichtet ist, die auf mindestens einer Außenseite (16) des die Batterie oder die Batterien (11) enthaltenden Behälters (10) vorgesehen ist, wobei die Wärmetauschzone (15) einen Bereich außerhalb des Behälters (10), der gegenüber dem Ausgang (14a) des Kanals (14) angeordnet ist, und einen Bereich aufweist, der gegenüber dem Inneren des Behälters (10) angeordnet ist, wobei die Vorrichtung **dadurch gekennzeichnet ist, dass** die Wärmetauschzone (15) aus einem Kühler besteht, der eine metallische Grundplatte (17) aufweist, die auf einer ihrer Seiten eine erste Reihe von Rippen (18), die zum Ausgang (14a) des Kanals (14) gerichtet sind, und auf der gegenüberliegenden Seite eine zweite Reihe von Rippen (19) aufweist, die ins Innere des Behälters (10) gerichtet sind.

2. Vorrichtung nach Anspruch 1, **dadurch gekennzeichnet, dass** der Kühler (15) dicht an eine Außenwand des Behälters (10) angeschlossen ist, die sich gegenüber dem Ausgang (14a) des Kanals (14) befindet.

3. Vorrichtung nach einem der Ansprüche 1 oder 2, **dadurch gekennzeichnet, dass** sie Einrichtungen zum Wärmeaustausch durch Konvektion zwischen den Rippen (19) des Kühlers (15) und der Batterie oder den Batterien (11) aufweist.

4. Vorrichtung nach einem der Ansprüche 1 oder 2, **dadurch gekennzeichnet, dass** sie Einrichtungen zum Wärmeaustausch durch Konduktion zwischen den Rippen (19) des Kühlers (15) und der Batterie oder den Batterien (11) enthält, wobei diese Einrichtungen eine metallische Struktur oder Wärmeleitrohre enthalten.

5. Vorrichtung nach einem der Ansprüche 1 bis 4, **dadurch gekennzeichnet, dass** mindestens eine der Außenwände des die Batterie oder die Batterien (11) enthaltenden Behälters (10) mindestens eine Klappe (20) aufweist, die geöffnet werden kann, um das Innere des Behälters (10) mit der Umgebungsluft in Verbindung zu bringen.

6. Kraftfahrzeug, insbesondere Elektrofahrzeug, das mit einer Kühlvorrichtung nach einem der Ansprüche 1 bis 5 ausgestattet ist.

7. Kraftfahrzeug nach Anspruch 6, **dadurch gekennzeichnet, dass** der die Batterie oder die Batterien (11) enthaltende Behälter (10) lösbar im Fahrzeug befestigt ist.
